# EUROPEAN PATENT SPECIFICATION

(11) **EP 1 450 614 B1**
(45) Date of publication and mention of the grant of the patent: **02.07.2008**
(21) Application number: 02786228.3
(22) Date of filing: 09.12.2002
(51) Int. Cl.: A21D 13/06, A21D 2/26

(54) **METHOD FOR PREPARING CAKE BATTER**
VERFAHREN ZUR HERSTELLUNG VON KUCHENTEIG
PROCEDE DE PREPARATION DE PATE A GATEAU

(30) Priority: 07.12.2001 NL 1019520
(43) Date of publication of application: 01.09.2004
(73) Proprietor: Campina B.V., 5301 LB Zaltbommel (NL)
(72) Inventor: DONKERS, Henrica, Martina, Maria, NL-5427 JL Boekel (NL); VAN DER SOMMEN, Carolus, Gerardus, Maria, NL-5421 JG Gemert (NL)
(74) Representative: Bot, David Simon Maria
(86) International application number: PCT/NL2002/000805
(87) International publication number: WO 2003/047354

(56) References cited:
- EP-A- 0 993 777
- GB-A- 924 249
- GB-A- 1 034 124
- GB-A- 1 074 087
- GB-A- 1 393 022
- US-A- 5 320 859
- DATABASE WPI Derwent Publications Ltd., London, GB; AN 1979-12946b XP002209871 & JP 54 002377 A, 9 January 1979 (1979-01-09)
- PATENT ABSTRACTS OF JAPAN vol. 017, no. 315 (C-1071), 16 June 1993 (1993-06-16) & JP 05 030890 A (KANEGAFUCHI CHEM IND CO LTD), 9 February 1993 (1993-02-09)
- PATENT ABSTRACTS OF JAPAN vol. 1998, no. 02, 30 January 1998 (1998-01-30) & JP 09 266750 A (FUJI OIL CO LTD), 14 October 1997 (1997-10-14)
- PATENT ABSTRACTS OF JAPAN vol. 1997, no. 03, 31 March 1997 (1997-03-31) & JP 08 289714 A (KANEBO FOODS LTD), 5 November 1996 (1996-11-05)

## Description

The invention relates to a method for preparing fat-containing cake batter, in particular for preparing pound cake batter which is used to prepare what are known as pound cakes. The invention also relates to an emulsion for preparing the batter, to which only one or more dry ingredients have to be added in order to obtain the batter, which can be beaten in one step before being baked, and to a method for preparing cake using the abovementioned cake batter, and to a baked product obtained by baking the cake batter.

US 5,320,859 describes a high-protein dough mix for a leavened bakery product, comprising a blend of water, a protein containing material, a sweetener, a vegetable shortening, flour and a leavening agent. Flour is present in an amount up to 50 % of the dough mix.

JP 54002377 describes a mixture of 100 parts of edible fat, 20 - 90 parts of starch, 10-30 parts of sodium casein, 0.5 - 5.0 parts of alkali salt and 200-800 parts of water, which after heat-treatment, homogenization and drying is combined with 10-40 parts of egg white albumin, 5-20 parts of active wheat protein and water to obtain a dough. From the dough, soft voluminous choux can be prepared with a moisture content which is much less than that of choux prepared from conventional dough.

Cakes are generally prepared from a mixture of the ingredients sugar, fat (including edible oils and mixtures of fats and/or edible oils), flour and bird's eggs; if these ingredients are used in equal quantities by weight, a cake of this type is also known as a "four-quarters cake" and as a pound cake.

For industrial preparation of pound cakes, in the specialist field, generally for economic reasons, there is a search for protein preparations for replacing the eggs in the cake batter. For example, De Wit and Hontelez-Backx (J.N. de Wit and E. Hontelez-Backx. Complete substitution of whey proteins for whole egg in cake. Bulletin of the International Dairy Federation 147 (1982) pp 52-53) replace the eggs in the cake batter with whey protein concentrate (WPC). However, the pound cakes obtained with a batter of this type were of inferior organoleptic quality. Moreover, it is first of all necessary to prepare an emulsion, consisting of fat and protein concentrate, which has to be left to stand overnight at 4°C after it has been mixed and homogenized. The emulsion is then beaten with the addition of WPC, the remaining dry ingredients then being mixed through the batter. Furthermore, to obtain an acceptable consistency, cakes could only be obtained by baking the batter obtained in a two-step process, in which the batter was firstly baked at 120°C in order to allow it to rise sufficiently, and baking was then completed at 160°C. This lengthened the baking time by a factor of 1.5 compared to the standard baking time required to bake a similar cake with a recipe in which eggs are included in the batter. The abovementioned batter from the prior art was found to be of no interest for industrial applications in view of the required incubation time, the preparation in two steps, the two-stage baking process, the baking time and the different taste.

EP 0 993 777 describes a composition and a process for replacing a part of the eggs in a baked product. The egg substitute comprises pea flour, rice flour, egg white, whey powder, caseinate powder and starch.

Furthermore, GB 1 393 022, in which reference is made to Furthermore, GB 1 393 022, in which reference is made to GB 1 314 595, discloses a preparation for replacing eggs, which preparation contains caseinate. This preparation can be used in dry form in order to replace a proportion of the eggs in a pound cake batter. However, preparing this preparation involves a number of process steps of heating and adding various ingredients, such as vegetables and a considerable quantity of various types of flour. Consequently, this preparation is laborious, time-consuming and labour-intensive to prepare and is therefore expensive. Moreover, a preparation of this type has an unfavourable organoleptic effect on the cake which is ultimately to be prepared.

It is an object of the invention to eliminate the abovementioned problems, and the invention to this end provides a method for preparing cake batter which comprises fat, sugar, vegetable flour, protein and water, the protein comprising at least 10 w/w%, based on the protein in the batter, of caseinate, and the method comprising the steps of:
A) providing an emulsion which comprises water, fat and caseinate, wherein said emulsion contains at most 5 w/w% of flour
B) mixing the emulsion from A) with the flour.

Surprisingly, it has been found that by taking up caseinate in an emulsion wherein also the water and the fat for the batter is taken up, it is possible for a considerable proportion of the bird's egg protein to be replaced, it being possible to obtain a good emulsion without adversely affecting the appearance, consistency, the texture and the organoleptic quality of the cake which is to be obtained. Thus a simple method for preparing a cake batter in which an emulsion which is simple to prepare is mixed with the flour without the caseinate having to be taken up in a complicated preparation which, in addition, has to undergo a large number of preliminary treatments. Furthermore, it has been found that the batter according to the invention can be beaten in a single step and can be baked in a simple standard baking process at constant, standard temperatures. The emulsion is also referred to as the "wet fraction" in the present document.

Vegetable flour is sufficiently well known in the specialist field, the flour preferably originates from grain, such as corn, wheat, oats, rye, barley; the flour is most preferably wheat flour or starch, preferably from corn and/or wheat, or a combination of flour and starch. The flour and any other dry ingredients (such as for example colorants or flavourings, baking powder, salt and thickening agents) which are mixed with the emulsion in step B) are also referred to as the "dry fraction" in the present document. The vegetable flour is substantially completely incorporated in the dry fraction, since its functionality may be at least partially lost if it is incorporated in the wet fraction and the latter is heated.

The term caseinate is sufficiently well known in the specialist field; reference is made in this context to Walstra et al, 1999, Dairy Technology ISBN 0-8247-0228-X. Examples of suitable caseinates are the sodium caseinates EM6 and EM7, marketed by DMV International B.V., Veghel, the Netherlands. According to the invention, the caseinate may also be incorporated in the emulsion in the form of converted casein. The term "converted" casein is generally known in the specialist field: converted casein is generally in dry form and in addition to casein also contains an alkali metal salt; when it is dissolved in an aqueous medium, such as the emulsion according to the invention, the casein is converted into the corresponding caseinate by the alkali metal salt. The caseinate which is preferably used according to the invention is sodium caseinate, although other alkali metal caseinates or mixtures thereof can also be used.

It is also advantageously possible to use a caseinate with an increased viscosity, such as for example EM10, marketed by DMV International B.V., Veghel, the Netherlands. EM10 has a viscosity which is 300 times as high as EM7 (respectively 1000 Pa.s and 3 Pa.s). A caseinate with an increased viscosity can be obtained, for example, by enzymatic crosslinking of caseinate with the aid of, for example, the enzyme transglutaminase.

Although caseinate also has an emulsifying action which may be sufficient to obtain a stable emulsion according to the invention, in addition to caseinate preferably also an emulsifier is taken up in the emulsion in order to obtain a good and homogenous emulsion. The preferred emulsifiers which can be used according to the invention are soluble in fat. Emulsifiers which are suitable for use in the batter are generally known in the specialist field. Examples of emulsifiers of this type are acetem (acetic acid esters of mono- and diglycerides), datem (diacetyltartaric acid esters of mono- and diglycerides), SSL (sodium stearoyl lactate) GMS (glycerol monostearate, mono- and diglycerides), PGMS (propylene glycol monostearate), PGE (polyglycerol esters), GLP (glycerol lactopalmitate), Lactem (lactic acid esters of mono- and diglycerides), as well as lecithin, sucrose esters and emulsifiers from the Tween series (ICI, Great Britain), such as Tween 60 or Tween 80. Tween 60 is preferred, most preferably in combination with mono- and diglycerides. Tween 60 provides the cake with a good texture and the desired volume.

The dry fraction comprises flour, but may also, for example, contain at least part of the sugars, although at least some of the sugar and preferably all the sugar is incorporated in the emulsion. The sugars may therefore be incorporated both in the liquid fraction and in the dry fraction, or partially in the liquid and partially in the dry fraction. The emulsion therefore preferably comprises sugar. Suitable sugars to be incorporated in the emulsion or in the dry fraction are known to the person skilled in the art. Examples of such sugars are granulated sugar, saccharose and dextrose or mixtures thereof, saccharose being preferred. The sugar may also be at least partially replaced in the batter by alternative sweeteners which are known in the specialist field.

According to the invention, the dry fraction may also consist of separate dry constituents which are mixed with the emulsion separately in step B). It is therefore not necessary for the dry ingredients to be mixed together to form a common dry fraction before being added to the emulsion; it is also possible for the dry ingredients to be added to the wet fraction separately.

The term "mixing" is also understood to encompass the term beating. It is preferable for the dry and wet fractions to be mixed in one process step. According to the invention, it is also possible for a proportion of the fat to be mixed with the emulsion and the dry fraction in step B).

In a particular embodiment, step A) of the method according to the invention comprises the steps of
A1) taking up the caseinate and optionally the sugar in water,
A2) adding emulsifier to the fat,
A3) mixing the aqueous medium obtained in A1) with the emulsifier-fat mixture obtained in A2).

In this way, it is possible to prepare a good and usable emulsion on an industrial scale.

In step A2), the fat is preferably preheated (preferably at 50-95°C, more preferably at 60-80°C), in order to dissolve the emulsifier therein. Furthermore, the fatty and aqueous fractions are preferably likewise mixed at the elevated temperature.

As has already been explained above, the caseinate does not require any special pretreatment and does not have to be taken up in a special preparation. According to the invention, it has been found that standard, generally available caseinate can be taken up in the emulsion without any pretreatment, with the result that the quantity of eggs in the batter can be limited considerably, it even being possible to prepare cake batter without eggs. To obtain a high organoleptic quality in the batter, the caseinate which is taken up in the water in step A1) preferably has a purity of at least 80%, more preferably of at least 90%, and even more preferably of at least 95%. For the same reasons, the caseinate is preferably taken up in the water in dry form.

Inter alia with a view to stability, the mixture obtained in step A3) is advantageously homogenized. The homogenization also preferably takes place at an elevated temperature of 50-95°C, preferably at 60-80°C. It is preferable to use a two-stage homogenization, the pressure during the first stage preferably lying between 100-200 bar, more preferably at 150 bar. During the second stage, the pressure is preferably between 25-75 bar, more preferably is 50 bar. Homogenization per se is a technique which is generally known in the specialist field and therefore requires no further explanation at the present point.

Thus, the temperature is brought to 50-95°C, preferably to 60-80°C, during or immediately after at least one of the steps A2) and A3) and preferably throughout both these steps, it being possible for the temperature for each step to vary.

The emulsion is preferably subjected to a UHT treatment in order to improve the shelf life. Although the UHT treatment may take place after the homogenization, it is preferably carried out prior to the homogenization. As an alternative, it is also possible to carry out a pasturization instead of a UHT treatment.

In the method according to the invention, the emulsion preferably comprises 50-80 w/w% of dry matter. This dry matter is defined as all the ingredients of the emulsion, except for the water, which is obtained after drying of the emulsion. The dry matter therefore comprises at least the fat, the emulsifier and the caseinate and also sugar, if it is present in the emulsion. If sugar is incorporated in the emulsion, therefore, the relative fat and caseinate content in the emulsion will be allowed to be lower than if the emulsion is free of sugar. The fat content will depend on the cake which it is intended to obtain; the same is true of the sugar content, although it is also possible to elect to add at least a proportion of the sugar to the emulsion as part of the dry fraction.

The emulsion preferably comprises 30-80 w/w% of fat and 0.5-5 w/w% of caseinate. It has been found that an emulsion of this type can be used to obtain a cake with very good organoleptic quality and good baking properties.

For the same reasons, the fat:caseinate ratio in the emulsion is preferably 10-30:1, more preferably 15-25:1, most preferably approximately 20:1. The term "approximately" is intended to allow a deviation of 10%.

In particular, the emulsion according to the invention comprises
25 - 75 w/w% of fat,
1 - 15 w/w% of protein,
30 - 75 w/w% of water, and
0 - 10 w/w% of emulsifier, resulting in an optimum cake without bird's eggs having to be added to the batter, which cake cannot or can scarcely by distinguished from cake prepared using bird's eggs. In an attractive embodiment, the protein in the emulsion according to the invention preferably comprises at least 30 w/w% of caseinate, more preferably at least 50 w/w%, even more preferably at least 80 w/w% of caseinate, and most preferably consists entirely of caseinate.

In a further attractive embodiment, the emulsion comprises
40 - 50 w/w% of fat,
2 - 3 w/w% of caseinate,
20 - 30 w/w% of water,
20 - 35 w/w% of sugar, and
0 - 10 w/w% of emulsifier, and
at most 5 w/w% of flour.

An emulsion of this type is eminently suitable for preparing batter for pound cake, for example.

In an attractive embodiment of the invention, the emulsion is free of bird's eggs or constituents thereof; bird's eggs have an adverse effect on the shelf life of the emulsion and make the emulsion unnecessarily expensive.

It is preferable for 10-60 w/w% of the protein constituents in the batter to be formed by caseinate. Incorporating caseinate in the batter according to the invention makes it possible to replace at least a corresponding proportion of the bird's egg protein therewith. More preferably, 20-50 w/w% of the protein constituents in the batter is formed by caseinate.

It is preferable for bird's eggs to be added to the batter. This is because it has been found that optimum cake can be obtained if bird's egg protein is incorporated in the batter in addition to caseinate. Without wishing to be restricted to any specific explanation, it is thought that caseinate has hydrophilic, structure-forming properties of the bird's egg protein which is to be replaced, it being possible for the necessary coagulating action of the protein to be created by bird's egg protein, it having been found that even if 60% of the original bird's egg protein is replaced by caseinate, the coagulating action of the remaining bird's egg protein and the auxiliary action of the replacement caseinate is sufficient to achieve the desired baking performance. In addition to caseinate, the batter therefore preferably contains 0-90 w/w%, more preferably 0-75 w/w%, most preferably 0-50 w/w%, based on the protein content in the batter, of bird's egg protein.

The bird's egg protein is preferably added in the form of pasteurized egg products, for example pasteurized whole egg of egg powder, but may also be added in the form of untreated contents of bird's eggs (also referred to as "eggs" or "bird's eggs" below), preferably chicken's eggs. The bird's egg protein is preferably at least partially and most preferably completely mixed with the dry and wet fractions in step C). It is also possible for bird's egg white to be incorporated in the emulsion, although this is not the most preferred option in view of the limited shelf life. If the bird's egg protein is added in step B), the protein in the emulsion may comprise 80 w/w%, based on the protein in the emulsion, of caseinate. The protein in the emulsion preferably comprises 95 w/w% of caseinate, and even more preferably consists entirely of caseinate.

A high level of the bird's egg protein can be replaced in the batter according to the invention by, in addition to caseinate, a water-soluble protein with good emulsifying and foam-forming properties and with a sufficient beatability being incorporated. Proteins of this type are known in the specialist field, for example blood plasma (such as cattle blood plasma produced by Harimax (the Netherlands), soluble wheat protein (for example SWP 100 produced by Amylum (Belgium), protein from papilionaceous flowers, such as pea protein (for example Pisane HD produced by Cosucra (Belgium), soya protein (Danpro S-780 produced by Central Soya European Proteins A/S (Denmark) and whey protein. Whey proteins have proven to be very suitable proteins for this purpose. Whey proteins are generally known in the specialist field and are commercially available. It is preferable for whey protein isolates (WPI) and whey protein concentrates (WPC) to be used for this purpose. The terms WPI and WPC are generally known in the specialist field; reference is made in this context to Walstra et al., 1999, Dairy Technology, ISBN-0-8247-0228-X. WPC with a high protein content, for example 60 w/w%, preferably 80 w/w%, is preferred; these WPCs are respectively designated WPC60 and WPC80 in the specialist field. It is also possible to use WPC35, for example. WPI typically has a protein content of 90 w/w% or higher and is most preferred. Like the caseinate, whey protein is preferably at least partially and most preferably completely incorporated in the emulsion.

By incorporating whey protein as well as caseinate in the batter, it is possible to replace a very large proportion or even all the bird's egg protein from the batter, so that it is possible to obtain a batter without bird's eggs being required.

In a particular preferred embodiment, the protein in the batter comprises 30-70 w/w% of caseinate and 30-70 w/w% of whey protein. Using such high contents of caseinate and whey protein means that only a limited quantity of bird's eggs is required, and that it is even possible to obtain a batter without adding bird's eggs.

As has already been explained above, if a protein with the correct emulsifying properties, foam-forming properties and partial coagulating ability is incorporated, it is possible to completely eliminate the use of eggs in preparing the batter according to the invention. This is particularly advantageous since eggs play a crucial role in determining the costs of the industrial preparation of cake. For example, the protein in the batter according to the invention may consist, for example, of 50 w/w% of caseinate and 50 w/w% of WPI or WPC.

It has been found that the method according to the invention is eminently suitable for preparing a batter for pound cake, in which the fat:sugar:vegetable flour:protein ratio in the batter is 0.8-1.2:0.8-1.2:0.8-1.2:0.05-0.30.

The cake batter according to the invention can advantageously be baked at a substantially constant temperature without this having an adverse effect on the consistency of the cake. The baking temperature is preferably between 140-200°C, most preferably between 160-180°C.

In a preferred embodiment, the abovementioned emulsion is concentrated and has a fat: caseinate ratio of 10-30:1. It is therefore possible for an emulsion of this type according to the invention to be supplied to industrial bakeries, where this emulsion can be rediluted on site, and the dry fraction, as well as if appropriate a limited number of eggs, can be added to the emulsion in order to obtain the cake batter which can then simply be baked off.

The invention also relates to a baked product, in particular cake, obtainable by baking a batter which can be obtained using the method according to the invention.

The invention will be explained in more detail below with reference to a number of examples.

### Examples

### Pound cakes 1, 2, 3 and 4:

First of all, emulsions were prepared:
ingredients of the emulsions: (grams)

| | Emulsion I | Emulsion II | Emulsion III | Emulsion IV |
|---|---|---|---|---|
| Butter fat (Campina, Aalter, Belgium) | | 223 | | |
| Palm oil (Unimills B.V., the Netherlands) | | | 223 | |
| WPI (Bipro, Davisco Foods International inc., USA) | 31.3 | | | 25.0 |
| Caseinate (EM7, DMV International the Netherlands) | | 8.2 | 10.0 | 10.0 |
| BV46 (DMV International the Netherlands) | 19.0 | | | 19.0 |
| Emulsifier GMS (Danisco, Denmark) | | 7.0 | 7.0 | |
| Emulsifier Datem (Danisco, Denmark) | | 0.52 | 1.0 | |
| Water | 196.9 | 137.6 | 137.6 | 196.6 |
| Total | 247.0 | 376.3 | 378.7 | 250.9 |

### Emulsion I:

WPI was dissolved in water. The solution was then heated to 65°C. BV46 was added and the solution was heated again, with stirring, to 65°C.

The mix was homogenized at 150/50 bar and 60°C using a Rannie homogenizer (Rannie, Denmark). The emulsion obtained in this way was cooled to 7°C in a refrigerator. The next day, this emulsion was used to prepare the pound cakes.

### Emulsions II and III:

The caseinate was dissolved in water. The butter fat or the palm oil was heated to 70°C. The emulsifiers were added to the fat and the temperature was once again brought to 70°C. The caseinate solution was added to the fat, and the entire mixture was brought back to 70°C with stirring.

This mixture was homogenized at 150/50 bar and 65°C using a Rannie homogenizer (Rannie, Denmark). The emulsion was cooled to 7°C in a refrigerator.

The next day, the emulsion was used to prepare the pound cakes.

### Emulsion IV:

As Emulsion I, but the caseinate was dissolved with the WPI in the water.

Recipes for the pound cakes:

| | Pound cake 1 | Pound cake 2 | Pound cake 3 | Pound cake 4 | Pound cake reference |
|---|---|---|---|---|---|
| Flour (Albatros, Meneba N.V., the Netherlands) | 160 g | 165 g | 165 g | 165 g | 165 g |
| Wheat starch (Puramyl SP, Avebe, the Netherlands) | 62 g | 101 g | 98 g | 65 g | 65 g |
| Sucrose (extra fine granulated sugar, Suikerunie, the Netherlands) | 262 g | 262 g | 262 g | 262 g | 269 g |
| BV46 (DMV International, the Netherlands) | | | | | 19 g |
| Baking powder (Karam, Dethmers, the Netherlands) | 8 g | 6 g | 6 g | 6 g | 6 g |
| Whole egg | | 131 g | 131 g | | 262 g |
| Cooking salt | 2 g | 2 g | 2 g | 2 g | 2 g |
| Butter | 262 g | | | 262 g | |
| Margarine | | | | | 262 g |
| Emulsion I | 247 g | | | | |
| Emulsion II | | 376 g | | | |
| Emulsion III | | | 379 g | | |
| Emulsion IV | | | | 250.9 g | |
| Total | 1003 g | 1043 g | 1043 g | 1013 g | 1050 g |
| Volume after | 0.82 lit. | 0.70 lit. | 0.76 lit. | 0.70 lit. | 0.71 lit. |
| baking | | | | | |
| Observations | Excellent volume, good texture, good taste | Very good volume, pleasing texture, good taste, pleasant texture | Very good/excellent volume, pleasing texture, good taste, pleasant texture | Very good volume, good texture, good taste, good mouthfeel | Very good volume, good texture, good taste, good mouthfeel |

### Preparation method for pound cakes 1, 2, 3 and 4:

Flour, starch, sugar, salt and baking power were mixed by hand at 20°C. For pound cakes 1 and 4: the emulsion and butter were added. For pound cakes 2 and 3: the emulsions and the whole egg were added. All the ingredients were beaten for 2.5 minutes in a beating machine (type Hobart N-50, Hobart Cooperation, Canada) set to the medium position.

350 grams of batter were placed into greased baking tins immediately after beating (height of tins 7.5 cm, top length 18 cm, top width 9 cm). Baking took place in an oven (Probat, the Netherlands) for 60 minutes at 170°C.

### Preparation method for the reference pound cake:

Flour, starch, sugar, BV46, salt and baking powder were mixed by hand at 20°C. Whole egg and margarine were added. All the ingredients were beaten for 5 minutes in a beating machine (type Hobart N-50, Hobart Cooperation, Canada), set to the medium position.

350 grams of batter were placed into greased backing tins (height 7.5 cm, top length 18 cm, top width 9 cm). Baking took place in an oven (Probat, the Netherlands) for 60 minutes at 160°C.

## Claims

1. Method for preparing cake batter which comprises fat, sugar, vegetable flour, protein and water, the protein comprising at least 10 w/w%, based on the protein in the batter, of caseinate, and the method comprising the steps of:
A) providing an emulsion, which comprises water, fat, caseinate and optionally sugar, wherein said emulsion contains at most 5 w/w% of flour,
B) mixing the emulsion from A) with the flour in order to obtain the batter.

2. Method according to claim 1, wherein step A) comprises the following steps:
A1) taking up the caseinate and optionally the sugar in water,
A2) adding emulsifier to the fat,
A3) mixing the aqueous medium obtained in A1) with the emulsifier-fat mixture obtained in A2).

3. Method according to claim 2, wherein the mixture obtained in step A3) is homogenized.

4. Method according to claim 2 or 3, wherein the temperature is brought to 50-95°C, preferably to 60-80°C, during or immediately after at least one of the steps A2) and A3).

5. Method according to one of the preceding claims, wherein the emulsion comprises 50-80 w/w% of dry matter.

6. Method according to anyone of the preceding claims, wherein the emulsion comprises 30-80 w/w% of fat and 0.5-5 w/w% of caseinate.

7. Method according to anyone of the preceding claims, wherein the emulsion comprises
25 - 75 w/w% of fat,
1 - 15 w/w% of protein,
30 - 75 w/w% of water, and
0 - 10 w/w% of emulsifier,
the emulsion preferably comprising
40 - 50 w/w% of fat,
2 - 3 w/w% of caseinate,
20 - 30 w/w% of water,
20 - 35 w/w% of sugar, and
0 - 10 w/w% of emulsifier.

8. Method according to anyone of the preceding claims, wherein the emulsion is free of bird's eggs or constituents thereof.

9. Method according to anyone of the preceding claims, wherein bird's eggs are added to the batter.

10. Method according to claim 9, wherein the bird's egg protein is at least partially and preferably completely mixed with the flour and the emulsion in step B).

11. Method according to one or more of the preceding claims, wherein the emulsion comprises whey protein.

12. Method according to one or more of the preceding claims, wherein the protein in the batter comprises 30 - 70 w/w% of caseinate and 30 - 70 w/w% of whey protein.

13. Method according to anyone of claims 1-8, 11, 12, wherein the batter is free of bird's egg protein.

14. Method for preparing cake, comprising the preparation of a cake batter according to the method according to one or more of claims 1-13, and baking the said batter at a substantially constant temperature.

15. Method for preparing cake batter according to anyone of the preceding claims, wherein the fat:sugar:vegetable flour:protein ratio in the batter is 0.8-1.2:0.8-1.2:0.8-1.2:0.05-0.30.

16. An emulsion for preparing cake, which emulsion comprises
40 - 50 w/w% of fat,
2 - 3 w/w% of caseinate,
20 - 30 w/w% of water,
20 - 35 w/w% of sugar, and
0 - 10 w/w% of emulsifier,
and wherein said emulsion contains at most 5 w/w% of flour.

17. Subtantially flour-free emulsion according to claim 16, which is concentrated, and wherein the fat:caseinate ratio is 10-30:1.

18. Baked product, in particular cake, obtainable by baking the batter as defined in the method according to claim 15.

## Patentansprüche

1. Verfahren zur Herstellung eines Kuchenrührteiges, welcher Fett, Zucker, pflanzliches Mehl, Protein und Wasser umfasst, wobei das Protein mindestens 10 % (w/w), bezogen auf das Protein in dem Rührteig, an Caseinat umfasst und wobei das Verfahren die folgenden Schritte umfasst:
A) Bereitstellen einer Emulsion, die Wasser, Fett, Caseinat und möglicherweise Zucker umfasst, wobei die Emulsion höchstens 5 % (w/w) an Mehl enthält,
B) Vermischen der Emulsion aus A) mit dem Mehl, um den Rührteig zu erhalten.

2. Verfahren gemäß dem Anspruch 1, wobei Schritt
A) die folgenden Schritte umfasst:
A1) Aufnehmen des Caseinats und möglicherweise des Zuckers in Wasser,
A2) Hinzufügen von Emulgator zum Fett,
A3) Vermischen des wässriges Mediums, das in A1) erhalten wurde, mit der Emulgator-Fett-Mischung, die in A2) erhalten wurde.

3. Verfahren gemäß dem Anspruch 2, wobei die Mischung, die in Schritt A3) erhalten wird, homogenisiert wird.

4. Verfahren gemäß den Ansprüchen 2 oder 3, wobei die Temperatur während oder unmittelbar nach mindestens einem der Schritte A2) und A3) auf 50 bis 95 °C, vorzugsweise auf 60 bis 80 °C gebracht wird.

5. Verfahren gemäß einem der vorhergehenden Ansprüche, wobei die Emulsion 50 bis 80 % (w/w) an Trockenmasse umfasst.

6. Verfahren gemäß einem beliebigen der vorhergehenden Ansprüche, wobei die Emulsion 30 bis 80 % (w/w) an Fett und 0,5 bis 5 % (w/w) an Caseinat umfasst.

7. Verfahren gemäß einem beliebigen der vorhergehenden Ansprüche, wobei die Emulsion Folgendes umfasst
25 bis 75 % (w/w) an Fett
1 bis 15 % (w/w) an Protein
30 bis 75 % (w/w) an Wasser und
0 bis 10 % (w/w) an Emulgator,
wobei die Emulsion vorzugsweise Folgendes umfasst
40 bis 50 % (w/w) an Fett,
2 bis 3 % (w/w) an Caseinat,
20 bis 30 % (w/w) an Wasser,
20 bis 35 % (w/w) an Zucker und
0 bis 10 % (w/w) an Emulgator.

8. Verfahren gemäß einem beliebigen der vorhergehenden Ansprüche, wobei die Emulsion frei von Vogeleiern oder Bestandteilen derselben ist.

9. Verfahren gemäß einem beliebigen der vorhergehenden Ansprüche, wobei dem Rührteig Vogeleier zugesetzt werden.

10. Verfahren gemäß dem Anspruch 9, wobei das Protein des Vogeleis mindestens teilweise und vorzugsweise vollständig mit dem Mehl und der Emulsion in Schritt B) vermischt wird.

11. Verfahren gemäß einem oder mehreren der vorhergehenden Ansprüche, wobei die Emulsion Molkenprotein umfasst.

12. Verfahren gemäß einem oder mehreren der vorhergehenden Ansprüche, wobei das Protein in dem Rührteig 30 bis 70 % (w/w) an Caseinat und 30 bis 70 % (w/w) an Molkenprotein umfasst.

13. Verfahren gemäß einem beliebigen der Ansprüche 1 bis 8, 11, 12, wobei der Rührteig frei von Vogeleiprotein ist.

14. Verfahren zur Herstellung von Kuchen, welches die Herstellung eines Kuchenrührteiges gemäß des Verfahrens gemäß einem oder mehreren der Ansprüche 1 bis 13 umfasst, sowie das Backen des Rührteiges bei einer im Wesentlichen konstanten Temperatur.

15. Verfahren zur Herstellung eines Kuchenrührteiges gemäß einem beliebigen der vorhergehenden Ansprüche, wobei das Verhältnis von Fett:Zucker:pflanzlichem Mehl:Protein in dem Rührteig 0,8 bis 1,2:0,8 bis 1,2:0,8 bis 1,2:0,05 bis 0,30 beträgt.

16. Emulsion zur Herstellung von Kuchen, wobei die Emulsion Folgendes umfasst
40 bis 50 % (w/w) an Fett,
2 bis 3 % (w/w) an Caseinat,
20 bis 30 % (w/w) an Wasser,
20 bis 35 % (w/w) an Zucker sowie
0 bis 10 % (w/w) an Emulgator,
und wobei die Emulsion höchstens 5 % (w/w) an Mehl enthält.

17. Im Wesentlichen mehlfreie Emulsion gemäß Anspruch 16, welche konzentriert ist und bei welcher das Verhältnis von Fett:Caseinat 10 bis 30:1 beträgt.

18. Backware, insbesondere Kuchen, welche erhältlich ist, indem der Rührteig gemäß der Begriffsbestimmung in Anspruch 15 gebacken wird.

## Revendications

1. Procédé de préparation d'une pâte pour gâteau qui comprend de la matière grasse, du sucre, de la farine végétale, de la protéine et de l'eau, la protéine comprenant au moins 10 % M/M, sur la base de la protéine dans la pâte pour gâteau, de caséinate, et le procédé comprenant les étapes de :
A) fourniture d'une émulsion, qui comprend de l'eau, de la matière grasse, du caséinate et facultativement du sucre, dans lequel ladite émulsion contient au maximum 5 % M/M de farine,
B) mélange de l'émulsion résultant de A) avec la farine afin d'obtenir la pâte pour gâteau.

2. Procédé selon la revendication 1, dans lequel l'étape
A) comprend les étapes suivantes :
A1) absorption du caséinate et facultativement du sucre dans l'eau,
A2) ajout de l'émulsifiant à la matière grasse,
A3) mélange du milieu aqueux obtenu dans A1) avec le mélange émulsifiant/matière grasse obtenu dans A2).

3. Procédé selon la revendication 2, dans lequel le mélange obtenu dans l'étape A3) est homogénéisé.

4. Procédé selon la revendication 2 ou 3, dans lequel la température est amenée entre 50 et 95 °C, de préférence 60 et 80 °C, pendant ou immédiatement après au moins l'une des étapes A2) et A3).

5. Procédé selon l'une des revendications précédentes, dans lequel l'émulsion comprend 50 à 80 % M/M de matière sèche.

6. Procédé selon l'une quelconque des revendications précédentes, dans lequel l'émulsion comprend 30 à 80 % M/M de matière grasse et 0,5 à 5 % M/M de caséinate.

7. Procédé selon l'une quelconque des revendications précédentes, dans lequel l'émulsion comprend
25 à 75 % M/M de matière grasse,
1 à 15 % M/M de protéine,
30 à 75 % M/M d'eau, et
0 à 10 % M/M d'émulsifiant,
l'émulsion comprenant de préférence
40 à 50 % M/M de matière grasse,
2 à 3 % M/M de caséinate,
20 à 30 % M/M d'eau,
20 à 35 % M/M de sucre, et
0 à 10 % M/M d'émulsifiant.

8. Procédé selon l'une quelconque des revendications précédentes, dans lequel l'émulsion est dépourvue d'oeufs d'oiseaux ou de constituants de ceux-ci.

9. Procédé selon l'une quelconque des revendications précédentes, dans lequel des oeufs d'oiseaux sont ajoutés à la pâte.

10. Procédé selon la revendication 9, dans lequel la protéine d'oeufs d'oiseaux est au moins partiellement et de préférence complètement mélangée avec la farine et l'émulsion dans l'étape B).

11. Procédé selon une ou plusieurs des revendications précédentes, dans lequel l'émulsion comprend de la protéine lactosérique.

12. Procédé selon une ou plusieurs des revendications précédentes, dans lequel la protéine dans la pâte comprend 30 à 70 % M/M de caséinate et 30 à 70 % M/M de protéine lactosérique.

13. Procédé selon l'une quelconque des revendications 1 à 8, 11, 12, dans lequel la pâte est dépourvue de protéine d'oeufs d'oiseaux.

14. Procédé de préparation d'un gâteau, comprenant la préparation d'une pâte pour gâteau selon le procédé selon une ou plusieurs des revendications 1 à 13, et la cuisson de ladite pâte à une température sensiblement constante.

15. Procédé de préparation d'une pâte pour gâteau selon l'une quelconque des revendications précédentes, dans lequel le rapport matière grasse/sucre/farine végétale/protéine dans la pâte est de 0,8 à 1,2/0,8 à 1,2/0,8 à 1,2/0,05 à 0,30.

16. Emulsion pour préparer un gâteau, laquelle émulsion comprend
40 à 50 % M/M de matière grasse,
2 à 3 % M/M de caséinate,
20 à 30 % M/M d'eau,
20 à 35 % M/M de sucre, et
0 à 10 % M/M d'émulsifiant,
et ladite émulsion contient au maximum 5 % M/M de farine.

17. Emulsion sensiblement dépourvue de farine selon la revendication 16, qui est concentrée, et dans laquelle le rapport matière grasse/caséinate est de 10 à 30/1.

18. Produit cuit, en particulier gâteau, pouvant être obtenu en cuisant la pâte telle que définie dans le procédé selon la revendication 15.
